Europäisches Patentamt

European Patent Office

Office européen des brevets

(19)

(11) Numéro de publication: **0 203 006 B1**

(12) **FASCICULE DE BREVET EUROPEEN**

(45) Date de publication de fascicule du brevet:
**10.07.91**

(51) Int. Cl.5: **C01B 31/08**

(21) Numéro de dépôt: **86401047.5**

(22) Date de dépôt: **16.05.86**

(54) **Appareil et procédé de régénération de charbon actif.**

(30) Priorité: **20.05.85 FR 8507568**

(43) Date de publication de la demande:
**26.11.86 Bulletin 86/48**

(45) Mention de la délivrance du brevet:
**10.07.91 Bulletin 91/28**

(84) Etats contractants désignés:
**AT BE CH DE GB IT LI LU NL SE**

(56) Documents cités:
**FR-A- 511 899**       **FR-A- 558 850**
**FR-A- 616 811**       **FR-E- 27 063**
**GB-A- 362 609**       **US-A- 1 440 194**
**US-A- 1 440 195**

**PATENTS ABSTRACTS OF JAPAN, vol. 3, no.
87, 25 juillet 1979, 1 C 53; & JP - A - 54 62 188
(FUJI DENKI SEIZO K.K.) 18-05-1979**

**CHEMICAL ABSTRACTS, vol. 89, no. 8, 21
août 1978, page 97, résumé no. 61479x, Columbus, Ohio, US; & JP - A - 78 11 192 (J.
MASUDA et al.) 01-02-1978**

(73) Titulaire: **COMPAGNIE GENERALE DES MATIE-
RES NUCLEAIRES (COGEMA)
2, rue Paul Dautier B.P. 4
F-78141 Velizy-Villacoublay(FR)**

(72) Inventeur: **Moret, Jacques
Les Grands Magneux
F-87870 Saint Pardoux(FR)**
Inventeur: **Fosset, Jean-Maurice
La Combe de Thouron
F-87140 Nantiat(FR)**
Inventeur: **Couturier, Jacques
Les Châtres
F-87640 Razes(FR)**
Inventeur: **Viard, Noel
15, Cité du Fraisse
F-87250 Bessines(FR)**

(74) Mandataire: **Gutmann, Ernest et al
S.C. Ernest Gutmann - Yves Plasseraud 67,
boulevard Haussmann
F-75008 Paris(FR)**

PATENTS ABSTRACTS OF JAPAN, vol. 1, no. 28, 28 mars 1977, page 1369 C 76; & JP - A - 51 143 590 (TOKYO KOKI K.K.) 09-12-1976

CHEMICAL ABSTRACTS, vol. 94, no. 20, 18 mai 1981, page 113, résumé no. 158803q, Columbus, Ohio, US; & JP - A - 80 126 524 (KURITA WATER INDUSTRIES LTD.) 30-09-1980

**Description**

L'invention a pour objet un procédé et un appareil pour régénérer le charbon actif.

Le charbon actif, qui peut se présenter sous forme de grains ou de poudre, possède une structure interne de pores, qui lui confère un grand pouvoir adsorbant et lui permet d'adsorber des gaz et des vapeurs dans les gaz, ainsi que les substances dissoutes ou dispersées dans les liquides.

Ceci explique la raison pour laquelle le charbon actif, qu'il soit sous forme de particules granulaires, ou sous forme de particules pulvérulentes, est mis en oeuvre dans de nombreux traitements, en particulier de purification, notamment les traitements d'épuration de déchets gazeaux ou aqueux sortant d'usines et autres installations.

Cependant, au cours du traitement dans lequel le charbon actif est mis en oeuvre, l'adsorption se poursuit et le charbon actif se charge et se sature de matières adsorbées qui constituent des produits de contamination, ce qui fair perdre au charbon ses propriétés d'adsorption et le rend inactif.

Par conséquent, une fois qu'il est saturé avec ces produits de contamination le charbon actif doit être soit jeté, soit réactivé par élimination des produits de contamination.

Par ailleurs, la fabrication proprement dite du charbon actif peut faire intervenir des agents liants, qu'il est nécessaire d'éliminer avant l'utilisation du charbon actif dans les divers procédés de traitement de purification.

La réactivation du charbon actif se fait généralement en chauffant le charbon pour pyrolyser les matières de contamination qui doivent être éliminées des pores des particules de charbon, sans brûler les particules de charbon elles-mêmes.

On a déjà proposé de nombreux appareils pour régénérer le charbon actif, mais ceux-ci présentent l'un et/ou l'autre des inconvénients mentionnés ci-après : il s'agit notamment de problèmes mécaniques, par exemple des pannes sur lesquelles il est difficile d'intervenir en raison de la structure mécanique complexe, d'inhomogénéité de la température à l'intérieur du four, de faibles rendements thermiques qui peuvent être corrélés à la fois à la configuration mécanique du dispositif ainsi qu'à la nature du dispositif de chauffage, de risques de brûler et de perdre une partie importante des particules de charbon en raison de la difficulté de réguler la température, et de coûts élevés du dispositif.

La Société Demanderesse a proposé un dispositif de régénération du charbon actif, qu'il soit en poudre ou en grains, qui remédie aux inconvénients mentionnés ci-dessus.

Plus particulièrement, l'invention a pour but un appareil de régénération du charbon actif, mettant en oeuvre une configuration mécanique relativement simple.

L'invention a également pour but de proposer un appareil de régénération du charbon actif, dans lequel la température est sensiblement homogène, en particulier dans la zone du réacteur dans laquelle a lieu la pyrolyse des matériaux de contamination.

L'invention a également pour but de proposer un appareil de régénération du charbon actif dans lequel le dispositif de chauffage permet d'obtenir un bon rendement thermique.

L'invention a également pour but de fournir un appareil éliminant les risques de combustion du charbon actif et les risques d'explosion.

L'invention a également pour but de fournir un appareil pour régénérer le charbon actif sous forme de particules pulvérulentes sans qu'il y ait des pertes importantes de charbon actif, malgré la finesse des particules.

Enfin, l'invention a pour but de proposer un appareil de régénération du charbon actif, beaucoup moins onéreux que les appareils connus à ce jour.

Ceci a pu être réalisé par un procédé consistant à introduire le charbon actif à régénérer, sous forme de poudre ou de grains, dans un réacteur équipé de façon à être étanche vis-à-vis de l'oxygène, à chauffer de façon à avoir une température sensiblement homogène dans le réacteur dont l'atmosphère est saturée en vapeur d'eau, à l'aide de résistances ou d'induction magnétique, à réguler la pression pour qu'elle soit sensiblement égale à la pression atmosphérique, à faire avancer le charbon actif à régénérer de façon à ce qu'il y ait l'entraînement minimum des particules les plus fines (ci-après dénommées "poussières") dans l'atmosphère du réacteur, ces conditions étant telles qu'il y a une élimination complète des produits de contamination par pyrolyse, sans qu'il y ait perte importante du charbon actif à régénérer notamment par combustion des particules elles-mêmes ou entraînement des poussières de charbon.

L'appareil selon l'invention comprend :

- un réacteur en forme de cylindre 17) comportant une extrémité d'entrée et une extrémité de déchargement, lequel réacteur est équipé d'un dispositif de chauffage, et dans lequel on introduit le charbon à l'aide d'une trémie (1) disposée verticalement, comportant un orifice supérieur d'introduction du charbon actif à régénérer et un orifice inférieur de décharge dudit charbon actif à régénérer;

- des moyens pour assurer l'étanchéité du réacteur vis-à-vis de l'oxygène et situés au-dessus de l'extrémité d'entrée (6) du réacteur;
- un arbre ou une vis d'Archimède (10) situé à l'intérieur du réacteur;
- des moyens de chauffage (8) par induction magnétique ou par résistances, disposés à l'extérieur de la gaine du réacteur et réglables, de façon à avoir une température sensiblement uniforme à l'intérieur du susdit réacteur et suffisante pour pyrolyser les produits de contamination du charbon actif ;
- des moyens en communication avec le réacteur, d'évacuation des gaz et de condensation d'une partie de la vapeur d'eau du réacteur et de piégeage des particules de charbon volantes;
- des moyens en communication avec le réacteur et situés à proximité de l'entrée du réacteur pour réguler la pression afin qu'à l'intérieur du réacteur elle soit voisine de la pression atmosphérique, par addition éventuelle de gaz neutre et/ou de vapeur d'eau;
- des moyens en communication avec le réacteur et situés à proximité de l'entrée du réacteur pour injecter la vapeur d'eau afin que l'atmosphère à l'intérieur du réacteur soit saturée en vapeur d'eau;

et est caractérisé en ce que lorsque à l'intérieur du réacteur est disposé un arbre, celui-ci est équipé de pales sur toute sa longueur et lorsqu'à l'intérieur du réacteur est disposée une vis d'Archimède (10), celle-ci est continue pour transporter le charbon actif à régénérer de l'extrémité d'entrée du réacteur jusqu'à l'extrémité de déchargement du réacteur,

et en ce que l'extrémité d'entrée du réacteur est en communication avec l'orifice inférieur de décharge de la trémie, et l'extrémité de déchargement du réacteur est telle que le charbon actif régénéré tombe dans un caisson (11) dont la partie supérieure est équipée de moyens pour asperger d'eau le charbon actif provenant du réacteur, lequel caisson (11) plonge dans une cuve d'eau (12),

les moyens ci-dessus pour asperger d'eau servant ainsi à condenser une autre partie de la vapeur d'eau et des gaz résultant de la pyrolyse du réacteur, ce qui créé ainsi une dépression à l'intérieur du réacteur, provoquant le déplacement des gaz et de la vapeur d'eau à l'intérieur du réacteur en cocourant du mouvement du charbon actif transporté à l'intérieur du réacteur,

et caractérisé en ce que les susdits moyens d'évacuation des gaz et de condensation d'une partie de la vapeur d'eau du réacteur et de piégeage des particules de charbon volantes sont aussi situés au dessus de l'extrémité de déchargement du réacteur;

et caractérisé en ce que le réacteur comporte:

- une vis d'Archimède (2) pour décharger de la trémie le charbon actif à régénérer;
- des moyens additionnels en communication avec le réacteur et situés le long du réacteur pour réguler la pression afin qu'à l'intérieur du réacteur elle soit voisine de la pression atmosphérique, par addition éventuelle de gaz neutre et/ou de vapeur d'eau;
- des moyens additionnels en communication avec le réacteur et situés le long du réacteur pour injecter de la vapeur d'eau afin que l'atmosphère à l'intérieur du réacteur soit saturée en vapeur d'eau,
- les susdits moyens pour réguler la pression et la teneur en vapeur d'eau étant avantageusement constitués par des dispositifs communs.

La configuration de cet appareil permet, dans la mise en oeuvre du procédé de régénération du charbon actif, de façon inattendue, de diminuer la quantité d'énergie consommée par kilogramme de charbon actif à régénérer, tout en conservant une bonne qualité de régénération et en réglant le débit de charbon actif introduit dans la trémie et le temps de séjour à l'intérieur du réacteur.

La mise en oeuvre de cet appareil de régénération permet d'effectuer la pyrolyse des produits de contamination à éliminer, la pyrolyse de ces produits entraînant l'apparition dans l'atmosphère à l'intérieur du réacteur de gaz tels que des carbures saturés (méthane, butane, etc.) et l'oxyde de carbone.

Par atmosphère à l'intérieur du réacteur, il faut entendre le volume occupé par l'ensemble des gaz dans l'enceinte du réacteur, étant entendu que le volume non occupé par les gaz est occupé par le charbon actif et l'arbre à pales ou la vis d'Archimède.

Il est nécessaire que l'atmosphère à l'intérieur du réacteur soit saturée en vapeur d'eau, pour que la qualité du charbon actif régénéré soit satisfaisante.

Bien que le rôle de la vapeur d'eau soit incomplètement connu vis-à-vis de la régénération du charbon actif, une fois que les produits de contamination ont été pyrolysés, la vapeur d'eau agit de façon physique sur les particules de charbon actif pour régénérer la porosité. On peut donc considérer que la vapeur d'eau intervient comme réactif dans la régénération du charbon actif.

On désigne par atmosphère saturée en vapeur d'eau, un volume gazeux dans lequel la vapeur d'eau représente la majeure partie du volume total gazeux, en général supérieur à 90 %.

Il est également nécessaire que le réacteur soit étanche vis-à-vis de l'air, notamment vis-à-vis de l'oxygène, afin d'éviter tout risque d'explosion et d'inflammation des particules de charbon elles-mêmes.

En ce qui concerne le dispositif pour faire avancer le charbon actif à l'intérieur du réacteur, on a trouvé que l'utilisation d'une vis d'Archimède continue ou d'un arbre à pales discontinues présente l'avantage inattendu de minimiser l'entraînement des plus fines particules (poussières) de charbon dans l'atmosphère à l'intérieur du réacteur. Ceci évite par conséquent les risques d'explosion, ainsi que les pertes de charbon à régénérer, surtout lorsque celui-ci est sous forme pulvérulente.

Selon un mode de réalisation préféré de l'invention, la trémie est une cuve de forme telle que la surface de l'orifice supérieur est plus grande que celle de l'orifice inférieur, par exemple de forme conique dont la partie la plus évasée est l'orifice supérieur, par lequel est introduit le charbon actif à régénérer.

Selon un autre mode de réalisation préféré de l'invention, les moyens de décharge à l'intérieur de la trémie sont constitués par une vis d'Archimède verticale continue, dont le mouvement est assuré par un moteur situé par exemple au-dessus de la trémie. L'extrémité inférieure de cette vis d'Archimède débouche à l'extrémité d'entrée du réacteur et lorsque la vis est en mouvement, elle pousse le charbon actif à régénérer de la trémie dans le réacteur.

De façon avantageuse, l'axe de symétrie du cône correspond à l'axe de la vis d'Archimède.

Dans la partie inférieure de la trémie, cette vis d'Archimède est équipée de façon avantageuse de pales, notamment plates, qui ont la forme de parallélépipèdes allongés, et dont les plus petits côtés mesurent par exemple environ 1 cm.

Ces pales sont avantageusement soudées de façon à ce que les segments de droite qui définissent leur plus grand côté soient perpendiculaires à l'axe de la vis. Chaque pale est avantageusement inclinée par rapport au plan de base du cône de la trémie, selon une direction sensiblement parallèle au plan défini :
- par le segment de droite qui passe par les deux points d'intersection de l'hélicoïde de la vis et des deux plus grands côtés du parallélépipède de la pale ;
- et par la droite perpendiculaire au susdit segment, et qui coupe l'axe de la vis.

La longueur de ces pales doit être telle qu'elle permette de décoller le charbon actif de la surface interne des parois de la trémie.

De façon avantageuse, chaque pale plate a une dimension sensiblement égale à la valeur du rayon du cercle formé par l'intersection du volume de la trémie et du plan dans laquelle ladite pale tourne, tout en restant de préférence légèrement inférieure à cette valeur, afin d'éviter les frottements entre l'hélicoïde de la vis d'Archimède et la surface interne du cône.

De façon avantageuse, la distance entre le bord d'une paie et la surface interne de la trémie est par exemple d'environ 1 mm.

Ces pales plates sont avantageusement fixées sur la partie de la vis située selon environ le tiers inférieur de l'axe de symétrie du cône de la trémie. La distance entre deux pales adjacentes est avantageusement égale à environ la longueur du pas de la vis d'Archimède.

Selon un mode de réalisation préféré de l'invention, l'orifice inférieur de décharge de la trémie communique avec l'extrémité d'entrée du réacteur par l'intermédiaire d'un tube, appelé ci-après tube gaveur, dont l'axe longitudinal de symétrie est dans le prolongement de l'axe de symétrie du cône de la trémie.

En d'autres termes, l'axe longitudinal du tube gaveur se trouve dans le prolongement de l'axe de la vis d'Archimède.

De façon avantageuse, la vis d'Archimède se prolonge dans le tube gaveur selon l'axe longitudinal de celui-ci et débouche ainsi à l'extrémité d'entrée du réacteur.

Le diamètre du cube gaveur est tel qu'il est sensiblement égal au diamètre de la vis d'Archimède. On appellera ci-après diamètre de la vis d'Archimède, le diamètre du cercle obtenu par projection de l'hélicoïde de la vis selon l'axe de la vis, sur un plan perpendiculaire à l'axe de la vis.

De cette façon, le bord de l'hélicoïde de la vis d'Archimède est presque en contact avec la surface interne du tube gaveur, ce qui empêche le charbon actif d'adhérer sur la paroi interne du tube gaveur, puisqu'à chaque point de la surface interne du tube gaveur, le charbon est décollé par le passage de l'hélice ; le diamètre de la vis d'Archimède est de préférence légèrement inférieur pour éviter les frottements entre l'hélice et la surface interne du tube gaveur.

De façon avantageuse, la distance entre le bord de l'hélicoïde de la vis et la surface interne du tube gaveur est par exemple d'environ 1 mm.

La présence du tube gaveur permet d'une part d'assurer le guidage de la vis d'Archimède, d'autre part d'assurer l'étanchéité du réacteur vis-à-vis de l'air. Pour éviter les problèmes d'explosion à l'intérieur du réacteur, il faut en effet que l'air contenu dans la trémie ne puisse pas pénétrer dans le réacteur. Au cours du traitement, cette étanchéité peut être réalisée grâce au charbon actif présent dans le tube gaveur, dans la mesure où le charbon actif occupe une hauteur suffisante du tube gaveur pour assurer cette étanchéité.

De façon pratique, lorsque la quantité de charbon actif à régénérer contenue dans la trémie a été

5

introduite dans le réacteur, on arrête le mouvement de rotation de la vis d'Archimède au moment où la surface supérieure du charbon actif coïncide sensiblement à la partie supérieure du tube gaveur ; la masse de charbon située dans le tube gaveur forme alors un bouchon étanche entre l'air, notamment l'oxygène, et le réacteur, ce qui permet d'éviter les problèmes d'inflammabilité du charbon actif, voire d'explosion.

Selon un mode de réalisation préféré de l'invention, le réacteur est constitué par un cylindre horizontal.

De façon avantageuse, le rapport entre la longueur totale du cylindre du réacteur et son diamètre est compris de 8 à 15, et est notamment compris de 10 à 12, et vaut avantageusement 12.

Le charbon actif est transporté de l'entrée du réacteur jusqu'à l'extrémité de déchargement de celui-ci par un arbre équipé de pales ou par une vis d'Archimède continue.

La vis d'Archimède est avantageusement préférée.

En ce qui concerne l'arbre équipé de pales, celles-ci ont la forme d'un parallélépipède ou d'un trapézoïde et l'espacement entre deux pales consécutives est d'environ 10 cm. leur angle par rapport à l'axe de l'arbre étant avantageusement d'environ 45°.

L'axe de la vis d'Archimède ou de l'arbre équipé de pales peut être confondu avec l'axe du réacteur.

Dans le cas où l'axe de la vis d'Archimède est confondu avec l'axe du réacteur, le diamètre de la vis d'Archimède est sensiblement égal au diamètre interne du réacteur, afin qu'il n'y air pas formation dans le fond du réacteur d'un talon de charbon actif dont la hauteur serait égale à la différence de longueur entre le rayon interne du réacteur et celui de la vis.

Le diamètre de la vis d'Archimède correspond à celui déjà défini ci-dessus.

De façon avantageuse, le diamètre de la vis d'Archimède est d'environ 1 ou 2 mm inférieur au diamètre interne du réacteur, pour éviter les frottements entre l'hélice de la vis d'Archimède et la surface interne du réacteur.

De façon avantageuse, l'axe de la vis d'Archimède est décentré par rapport à l'axe du réacteur.

De façon avantageuse, l'axe de la vis d'Archimède est situé sous l'axe du réacteur et est perpendiculaire au rayon qui joint l'axe du réacteur à la génératrice inférieure du réacteur.

La distance entre l'axe de la vis d'Archimède et l'axe du réacteur ci-après appelée distance de décentrage est d'environ 8 mm à environ 12 mm, et avantageusement d'environ 10 mm.

Dans le cas du décentrage, il est avantageux de choisir d'une part la distance de décentrage et d'autre part la valeur du diamètre de la vis d'Archimède de sorte qu'il y ait environ 1 ou 2 mm entre la vis d'Archimède et la génératrice inférieure du réacteur.

Le décentrage a pour but de laisser un volume libre dans la partie supérieure du réacteur, ce qui facilite la circulation du courant des gaz présents dans le réacteur.

Il est avantageux que le diamètre de la vis d'Archimède ne soit pas trop petit par rapport au diamètre interne du réacteur, pour éviter une accumulation du charbon introduit dans le réacteur, sur les côtés du réacteur.

En tout état de cause, la couche de charbon actif doit avoir une hauteur telle que sa surface supérieure soit située sous l'axe de rotation de la vis d'Archimède et en pratique ne doit pas dépasser les 2/5èmes du diamètre du réacteur.

Par ailleurs, étant donné que la régénération du charbon actif est une réaction qui de fait dans la masse, il ne faut pas en effet que la couche de charbon soit trop épaisse afin que même le charbon actif situé dans la partie le plus inférieure de la couche soit également régénéré.

En ce qui concerne le mouvement de la vis à l'intérieur du réacteur, il doit être tel qu'il satisfasse aux conditions suivantes : être suffisamment lent pour éviter l'entraînement des poussières de charbon dans l'atmosphère du réacteur, étant donné la très faible densité du charbon actif pulvérulent, et être tel que le charbon actif à régénérer séjourne pendant un temps suffisant pour que la régénération soit de bonne qualité mais être tel qu'il ne séjourne pas plus d'environ une heure, dans les conditions de température et les autres conditions de réaction choisies, afin d'éviter les pertes importantes en charbon actif et éviter notamment que les pertes en charbon actif soient supérieures à environ 15 %.

En effet, si la vitesse d'avancement de la vis à l'intérieur du réacteur est trop rapide, il y a des mouvements dans le charbon actif suffisants pour que de la poussière de charbon actif s'envole à partir de la couche de charbon actif dans l'atmosphère du réacteur, ce qui a pour conséquence de boucher les moyens d'évacuation des gaz et de régulation de pression et une perte de charbon.

Par ailleurs, si la vitesse d'avancement est trop rapide, la pyrolyse des produits de contamination est incomplète et la régénération est de mauvaise qualité. Si le charbon actif séjourne trop longtemps, il peut y avoir grillage des particules de charbon elles-mêmes.

En ce qui concerne le dispositif de chauffage, il s'agit soit d'un chauffage à induction magnétique, soit d'un chauffage par résistance.

Ce dispositif doit pouvoir être régulé de façon à établir à l'intérieur du réacteur, une température pratiquement homogène, notamment dans les deux derniers tiers du réacteur.

Ce dispositif doit être tel que la température à l'intérieur du four soit d'environ 400 à environ 1 000° C, notamment d'environ 400 à environ 800° C, avantageusement d'environ 400° C à 600° C, et plus particulièrement d'environ 500° C.

Le choix de la température à l'intérieur du réacteur met en jeu au moins deux paramètres qui sont respectivement la qualité de la régénération du charbon, et la perte par grillage du charbon à régénérer.

La température de 500° C, qui n'est pas critique, permet d'avoir à la fois une qualité de régénération satisfaisante, sans qu'il y ait trop de perte par grillage, soit une valeur non supérieure à environ 10 %.

Au-dessus de 500° C, il y a une perte beaucoup plus importante par grillage. A titre indicatif, une température d'environ 800° C conduit à une perte d'environ 25 % par grillage du charbon actif. Au-dessous de 500° C, la qualité de régénération peut ne pas être suffisante, car les produits de contamination peuvent ne pas être totalement pyrolysés.

On peut avoir recours à une résistance unique située à l'extérieur du réacteur.

Mais, on a avantageusement recours à un chauffage par plusieurs résistances, positionnées les unes à côté des autres le long de la surface externe du réacteur.

Ce chauffage par résistance, en discontinu, permet de régler, pour chacune des résistances, l'énergie à dissiper, en fonction de la zone du réacteur qu'elle doit chauffer. Ceci permet d'obtenir une température pratiquement homogène, et également d'optimiser la consommation en énergie.

En effet, la quantité d'énergie nécessaire à l'entrée du four est supérieure à celle nécessaire à l'extrémité du four, puisqu'à l'entrée du four, il faut vaporiser l'eau contenue dans le charbon actif à régénérer, et porter le charbon actif à la température de réaction, tandis, qu'à l'extrémité du four, il faut maintenir la température de réaction.

De plus, chacune des résistances peur être réglée individuellement selon la quantité d'énergie souhaitée.

De façon avantageuse, les résistances sont au nombre de 4 à 6, correspondant à différentes zones qu'il est possible de définir comme indiqué ci-après à titre d'exemple.

Dans le cas où il y a 6 résistances, on peut définir par exemple 4 zones.

La première résistance permet la vaporisation de l'eau contenue dans le charbon actif à régénérer (zone 1).

Dès la deuxième résistance, ou dès le milieu de la deuxième résistance, il y a séchage et élévation de la température à une température pratiquement égale à la température de réaction (par exemple 500° C), c'est dans cette région correspondante du réacteur que la régénération commence (zone 2).

La troisième résistance définit la troisième zone et correspond à la zone où la température atteint la valeur de la température de réaction.

En ce qui concerne les quatrième, cinquième et sixième résistances, la température est la température de réaction, pour les régions concernées et il y a régénération du charbon actif.

Le nombre de résistances peut également être choisi de façon à ce que chacune fasse d'environ 40 à environ 60 cm.

Comme résistances chauffantes, on a avantageusement recours à des coquilles chauffantes qui entourent le réacteur, disposées de façon conjointe sur la surface externe du réacteur, directement en contact avec la surface externe de celui-ci, et munies sur leur surface supérieure d'un matériau isolant, tel que de la laine de verre ou un aggloméré de fibres de silice commercialisé sous le nom de Kerlane 45, distribué par LAFARGE REFRACTAIRE.

La température du charbon à l'intérieur du réacteur peut être contrôlée par des sondes, réparties sur la longueur du réacteur.

Des moyens en communication avec le réacteur et disposés le long de celui-ci permettent de réguler la pression et la teneur en vapeur d'eau à l'intérieur du réacteur.

Il est en effet nécessaire que la pression à l'intérieur du réacteur, soit voisine de la pression atmosphérique.

En effet, lorsque la pression est supérieure à la pression atmosphérique (surpression), on favorise l'entraînement des fines particules de poussières à partir de la couche de charbon dans l'atmosphère du réacteur ; la surpression conjuguée avec la présence des poussières de charbon dans le réacteur entraîne des risques d'explosion à l'intérieur du réacteur.

Par ailleurs, lorsqu'il y a trop de poussières dans l'atmosphère du réacteur et une surpression, les moyens de régulation de la pression et de régulation de vapeur d'eau peuvent être bouchés en raison de la formation d'une pulpe de charbon.

Lorsque la pression est inférieure à la pression atmosphérique (dépression), on favorise les entrées d'air donc en particulier d'oxygène, ce qu'il faut éviter en raison des problèmes d'inflammabilité du charbon actif et éventuellement d'explosion.

En ce qui concerne l'oxygène et les poussières, susceptibles d'entraîner l'inflammabilité du charbon actif, et éventuellement des explosions, la teneur en oxygène ne doit pas dépasser environ 10 % par rapport aux gaz totaux et l'atmopshère du réacteur ne doit pas contenir plus de 50 g de particules solides de charbon par m3 de gaz normal, c'est-à-dire de gaz ramené à température normale.

Pour éviter l'inflammabilité du charbon actif et éventuellement l'explosion, il faut également que la teneur en butane soit inférieure à environ 1,8 % et la teneur en CO soit inférieure à environ 12 %, ces deux gaz provenant de la pyrolyse des produits de contamination.

Le contrôle de la pression à l'intérieur du réacteur se fait par exemple à l'aide de colonnes à eau.

Le contrôle de la teneur en matières solides dans l'atmosphère du réacteur se fait par exemple à l'aide d'un dispositif classique filtrant les gaz à la sortie des moyens d'évacuation.

Le contrôle de la teneur en gaz tel que $O_2$, CO, méthane, butane et vapeur d'eau se fait par exemple à l'aide de tubes commercialisés sous le nom de tubes DRAEGER.

Les moyens pour réguler la pression et la teneur en vapeur d'eau sont avantageusement constitués par des dispositifs communs. Ils sont avantageusement situés près de l'extrémité d'entrée du réacteur et peuvent être constitués par une cheminée ou un évent.

Cette cheminée ou cet évent a pour but notamment d'éviter les remontées de vapeur dans la trémie.

D'autres moyens de régulation de la pression et de la teneur en vapeur d'eau sont en communication avec le réacteur et disposés le long de celui-ci. Ils peuvent être constitués par des injecteurs.

Les dispositifs de régulation de pression et de vapeur d'eau, qu'il s'agisse de cheminée, d'évent ou d'injecteur, permettent notamment, en cas de surpression, à la vapeur d'eau de s'échapper, ou en cas de dépression, d'ajouter de la vapeur d'eau ou du gaz neutre, tel que l'argon et notamment de l'azote et en cas d'insuffisance en vapeur d'eau, d'ajouter de la vapeur d'eau.

La vapeur d'eau provient en partie de la vaporisation de l'eau contenue dans le charbon actif à régénérer.

La vapeur d'eau peut être ajoutée soit sous forme d'eau, qui se vaporise sous l'effet de la température du réacteur, soit telle quelle.

De façon pratique, au début du traitement de régénération du charbon actif, on additionne avantageusement de la vapeur d'eau à la fois pour saturer l'atmosphère en vapeur d'eau, nécessaire à la réaction de régénération, et établir une pression sensiblement égale à la pression atmosphérique et limiter les risques d'explosion.

Lorsque la réaction se termine, on ajoute avantageusement du gaz neutre pour réguler la pression, car l'addition de vapeur d'eau pour réguler cette pression pourrait entraîner l'agglomération des poussières de charbon, sous l'action de l'eau produite par condensation de la vapeur d'eau, en raison de la baisse de température.

En ce qui concerne l'extrémité du réacteur, elle débouche sur un dispositif qui y est raccordé, qui permet de condenser une partie de la vapeur d'eau qui provient du réacteur.

La condensation de la vapeur d'eau permet de piéger les fines particules de poussières volantes à l'extrémité du réacteur.

Ce dispositif a avantageusement la forme d'une cheminée, dont l'ouverture est réglable.

De façon avantageuse, la vis d'Archimède -ou l'arbre équipé de pales- déborde de l'extrémité de déchargement du réacteur et traverse l'espace directement situé sous le susdit dispositif de condensation de la vapeur d'eau.

Dans le prolongement vertical du susdit dispositif de condensation se trouve un dispositif ci-après désigné par dispositif de soutirage.

Ce dispositif de soutirage comprend :

- un caisson notamment parallélepipédique, sur lequel débouche la vis d'Archimède ou l'arbre équipé de pales ;
- une cuve d'eau, dans laquelle le caisson baigne et dans laquelle le charbon actif qui est transporté jusqu'à l'extrémité du déchargement du réacteur, tombe.

Cette cuve d'eau est avantageusement maintenue à température ambiante par un échangeur de chaleur.

Ce caisson est avantageusement équipé de moyens qui aspergent d'eau le charbon provenant de l'extrémité de déchargement et facilite la décharge du charbon actif régénéré. Il y a donc une suspension eau-charbon dans la cuve, qui forme une pulpe diluée de charbon actif.

Cette suspension est avantageusement maintenue homogène par un agitateur.

Ces moyens qui aspergent d'eau ont aussi pour fonction d'absorber une partie de la vapeur d'eau qui provient du réacteur, étant rappelé qu'une autre partie de la vapeur d'eau est condensée dans le dispositif

EP 0 203 006 B1

de condensation mentionné ci-dessus.

Ces moyens qui aspergent d'eau sont avantageusement constitués par deux cascades d'eau, qui sont de préférence croisées.

La dépression produite dans le réacteur par la condensation de la vapeur d'eau assure l'écoulement de la vapeur d'eau en cocourant du charbon actif.

Les deux cascades peuvent être alimentées à partir de la cuve de refroidissement par une pompe centrifuge, qui prélève une partie de la pulpe diluée de charbon actif, à partir de la cuve.

Une pompe volumétrique prélève la pulpe de charbon et dirige ladite pulpe vers une installation destinée à récupérer le charbon actif régénéré, sous forme sèche ou vers une installation dans laquelle le charbon actif régénéré est directement mis en oeuvre.

De façon avantageuse, un robinet flotteur compense en eau neuve ou en eau recyclée le volume prélevé et maintient le niveau constant dans la cuve.

L'invention concerne également un procédé de régénération du charbon actif, qui comprend les étapes décrites ci-après :

- on introduit le charbon actif dans une trémie disposée verticalement comportant un orifice supérieur d'introduction du charbon actif à régénérer et un orifice inférieur de décharge dudit charbon actif à régénérer ;
- les moyens pour faire avancer le charbon actif sont constitués par une vis d'Archimède continue ou un arbre équipé de pales sur toute sa longueur;
- on met en fonctionnement des moyens pour faire avancer le charbon actif à l'intérieur de la trémie et le décharger dans un réacteur, dont l'extrémité d'entrée est en communication avec l'orifice inférieur de décharge de la trémie ;
- on arrête le fonctionnement des moyens qui font avancer le charbon actif dans la trémie, lorsqu'on a fait passer la quantité de charbon actif que l'on souhaite traiter à travers la trémie, de façon à laisser dans la partie inférieure de la trémie, une quantité de charbon actif suffisante pour assurer l'étanchéité du réacteur vis-à-vis de l'air ;
- on met en fonctionnement le chauffage du réacteur, régulé de telle sorte que la température à l'intérieur du réacteur soit pratiquement homogène ;
- on met en fonctionnement la vis d'Archimède - ou l'arbre à pales- qui traverse longitudinalement le réacteur, et qui est destiné à transporter le charbon actif de l'extrémité d'entrée du réacteur à l'extrémité de déchargement à une vitesse telle que le mouvement des particules de charbon soit suffisamment faible pour qu'il n'y ait pas d'entraînement de poussières de charbon actif dans l'atmosphère du réacteur ;
- à l'extrémité du réacteur, on condense une partie de la vapeur d'eau qui provient du réacteur par des moyens de condensation, et on piège ainsi les particules de poussières volantes ;
- on fait tomber le charbon actif régénéré dans un caisson dont la partie supérieure est équipée de moyens pour asperger d'eau le charbon actif régénéré provenant du réacteur, lequel caisson plonge dans une cuve d'eau ;
- on condense ainsi par les moyens pour asperger d'eau une autre partie de la vapeur d'eau et des gaz résultant de la pyrolyse du réacteur et on crée ainsi une dépression à l'intérieur du réacteur, ce qui provoque le déplacement des gaz et de la vapeur d'eau à l'intérieur du réacteur en cocourant du mouvement du charbon actif transporté à l'intérieur du réacteur ;
- on régule la pression à l'intérieur du réacteur, afin qu'elle soit égale environ à la pression atmosphérique, par des moyens permettant l'évacuation de la vapeur d'eau ou des gaz contenus à l'intérieur du réacteur, pour éviter la surpression, ou permettant d'introduire un gaz neutre ou de la vapeur d'eau en cas de dépression ;
- on régule la teneur en vapeur d'eau à l'intérieur du réacteur par des moyens permettant d'introduire de la vapeur d'eau, afin que l'atmosphère du réacteur soit saturée en vapeur d'eau ;

l'ordre de ces différentes étapes indiqué ci-dessus n'étant pas limitatif et certaines des étapes pouvant avoir lieu simultanément.

D'autres caractéristiques de l'invention ressortiront de la description détaillée donnée ci-après, en référence aux figures des dessins annexés dans lesquels :

- la figure 1 est une vue en élévation et en coupe de la trémie présentant également le passage du charbon à régénérer de la trémie dans le réacteur ;
- la figure 2 est une vue en élévation et en coupe de l'installation de régénération représentant la trémie, le réacteur et le dispositif de soutirage du charbon actif régénéré ;
- la figure 3 est une vue en coupe selon un diamètre du réacteur montrant la position de l'axe de la vis d'Archimède et du réacteur ;

9

- la figure 4 est une vue en élévation et en coupe du dispositif de soutirage, situé à la partie de l'extrémité de déchargement du réacteur.

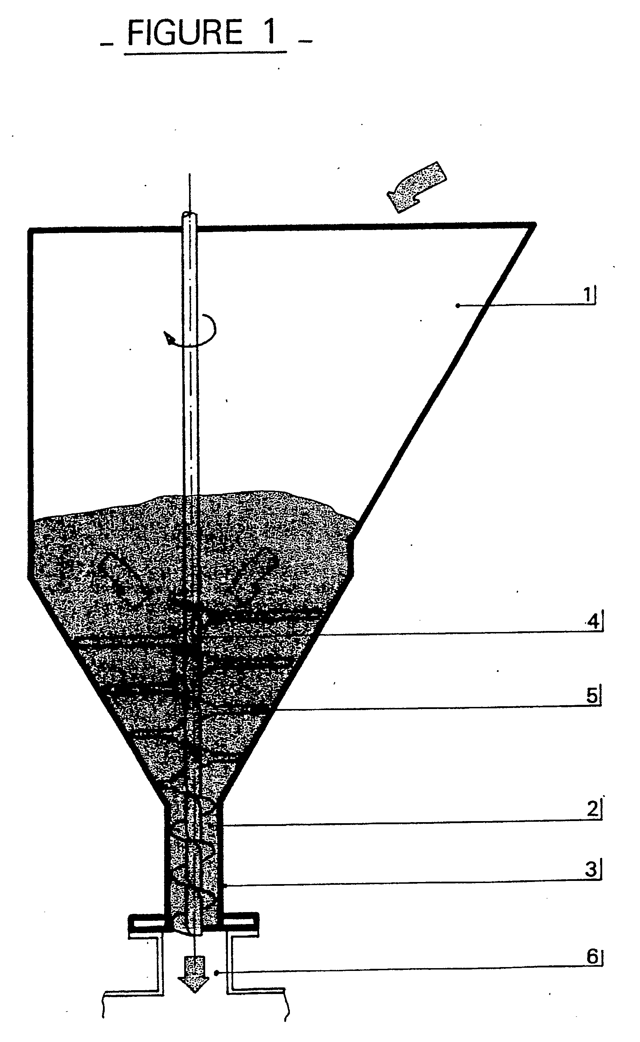

Comme représenté sur la figure 1, le dispositif d'alimentation se compose d'une trémie 1 de 50 litres, dont le distributeur 2 est une vis d'Archimède verticale tournant juste dans un tube gaveur 3 qui débouche à l'extrémité d'entrée du four. Sur l'arbre de la vis 4, des pales inclinées 5 brassent le charbon et le poussent vers la vis, ce qui assure l'étanchéité de l'extrémité d'entrée du réacteur 6.

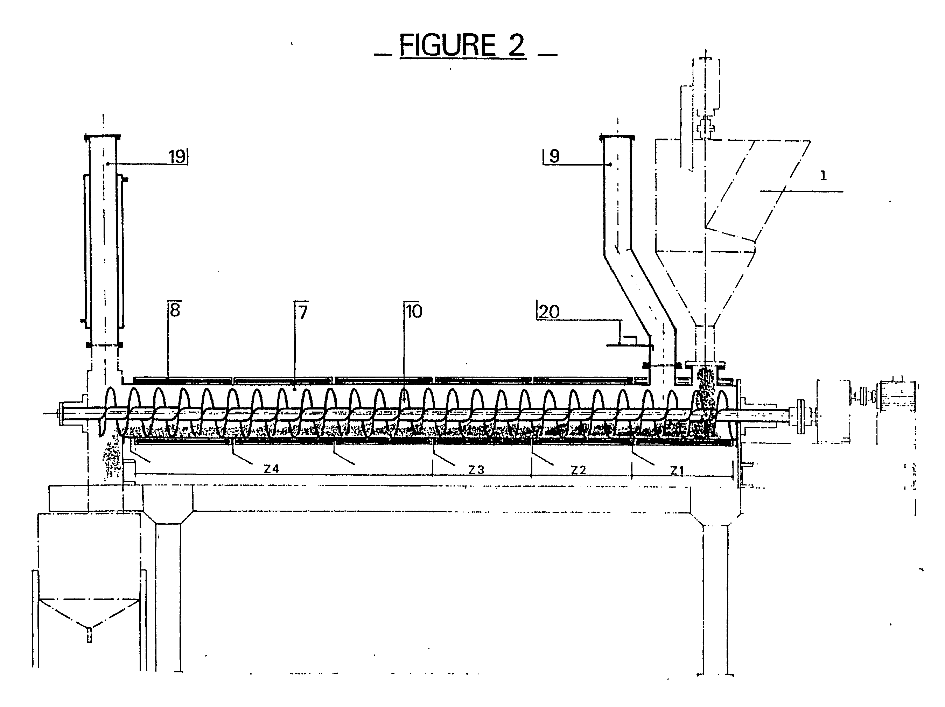

En ce qui concerne le réacteur représenté à la figure 2, c'est un cylindre horizontal 7 dont le rapport entre la longueur (L) et le diamètre (Ø) est égal à 12, chauffé par six résistances 8 réparties en quatre zones, régulées séparément.

Les zones 1 et 2, de l'entrée du four, à L/3, assurent l'évaporation de l'eau contenue et la mise en température du charbon.

Les zones 3 et 4, à 2 L/3, assurent la température de réaction pendant le temps prévu.

En tête du corps de chauffe, un évent 9 permet la décompression, si nécessaire, et l'addition éventuelle de vapeur d'eau ou de gaz neutre.

Six sondes, réparties sur la longueur, contrôlent la température du charbon.

Au-dessus de la sortie du réacteur, une cheminée refroidie 19, à ouverture réglable, condense une fraction de la vapeur d'eau provenant du réacteur, ce qui piège les fines particules volantes.

Le transport du charbon dans le tube est assuré par une vis d'Archimède 10 continue dont le pas est égal à la moitié du diamètre de la vis.

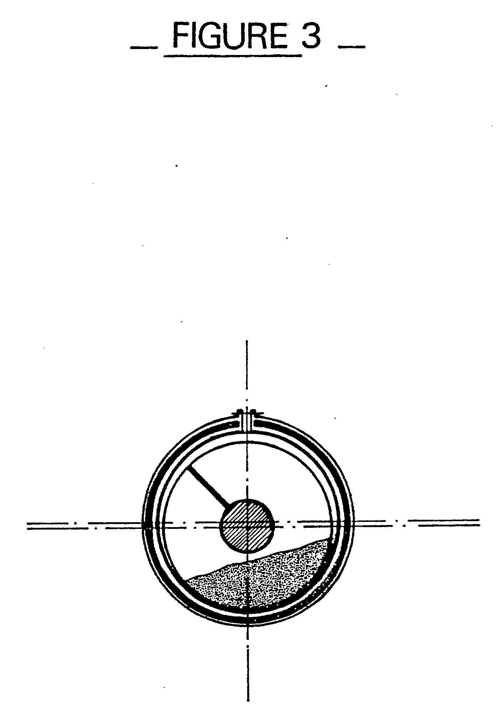

Cette vis est positionnée au plus près de la génératrice inférieure du réacteur, par exemple à une distance d'environ 1 mm, le croissant dégagé étant réservé à la circulation des gaz (voir figure 3 ci-après).

Il est prévu, dans le corps du réacteur, des injecteurs 20 d'eau, ou de gaz neutre, pour réguler la pression et la vapeur d'eau à l'intérieur du réacteur pendant la réaction ou en cas d'incident, et pour permettre l'addition de vapeur d'eau, notamment à la mise en marche de l'appareil et l'addition de gaz neutre, notamment à l'arrêt pendant la période de refroidissement.

A la figure 3, on a représenté une coupe selon un diamètre du réacteur, qui montre le décentrage possible entre l'axe de la vis d'Archimède et l'axe du réacteur.

En raison du décentrage, dans la partie supérieure du réacteur, il y a un volume dont la surface génératrice est en forme de croissant ce qui permet la circulation des gaz.

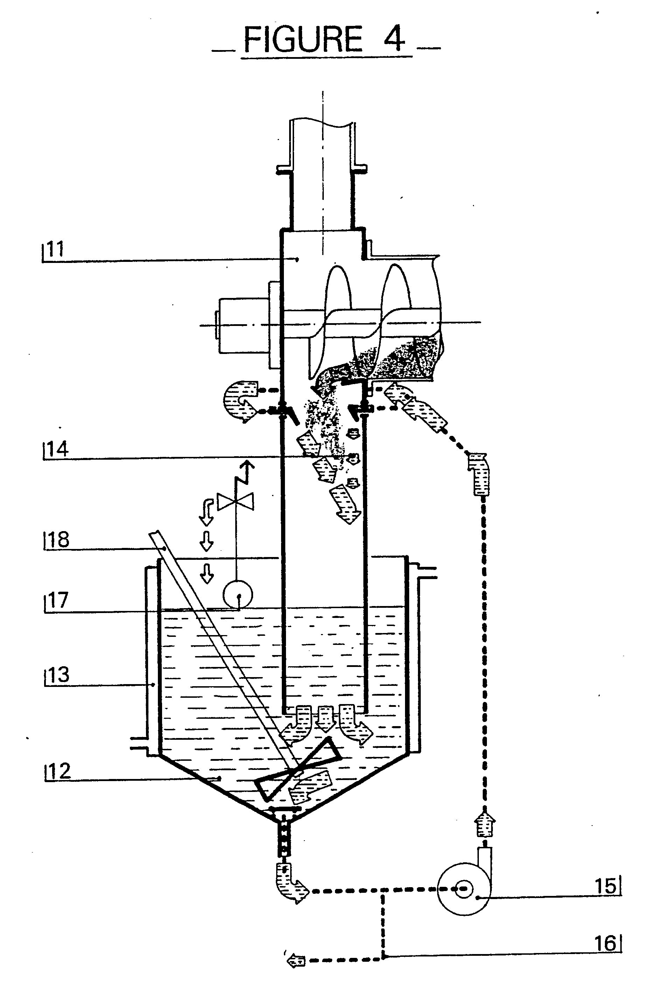

La figure 4 est représentative du dispositif de soutirage. Il se compose d'un caisson 11, dans lequel débouche la vis transporteuse. Ce caisson parallélépipédique baigne dans une cuve d'eau 12, maintenue par un échangeur 13 à température voisine de l'ambiante ; à l'intérieur, deux cascades croisées 14 capturent le charbon tombant du réacteur et le noient dans la cuve ; il se forme donc une pulpe eau-charbon dans la cuve, dont l'homogénéité est maintenue par un agitateur 18.

Les deux cascades absorbent, en outre, la vapeur d'eau produite dans les zones 1 et 2 du réacteur. La dépression produite dans le four par la condensation assure l'écoulement en cocourant de la vapeur. Les deux cascades sont alimentées à partir de la cuve de refroidissement par une pompe centrifuge 15 sur l'aspiration de laquelle une pompe volumétrique 16 prélève la pulpe eau-charbon et l'évacue vers le procédé. Un robinet à flotteur 17 compense en eau neuve ou recyclée le volume prélevé et maintient le niveau constant dans la cuve.

L'installation et le procédé selon l'invention s'appliquent aussi bien au charbon en poudre, qu'au charbon en grains.

Le charbon actif à régénérer provient le plus souvent de traitements de purification dans lesquels il a été mis en oeuvre.

Le charbon à régénérer peut provenir notamment d'une installation de purification de sulfate de sodium.

Ce charbon actif est sous forme d'une poudre très fine dans laquelle 90 % des particules ont un diamètre inférieur à 80 $\mu$m. Ce charbon a un taux d'humidité d'environ 50 % et une densité apparente de 0,5, lorsqu'il est humide et de 0,3 lorsqu'il est sec.

Ce charbon est saturé par des matières organiques (essentiellement acides humiques) et peur contenir également du molybdène sous forme d'acide molybdique.

La charge du charbon actif est d'environ 10 % en poids de matières organiques et 2 % de molybdène.

Avant d'être introduit dans la trémie, le charbon contenant le molybdène, est avantageusement soumis à une opération dont le but est de transformer l'acide molybdique en molybdate de sodium, suivie d'une opération solide-liquide.

Pour transformer l'acide molybdique en molybdate de sodium, on peur par exemple faire imprégner le charbon actif avec de la soude, ce qui se traduit chimiquement par la réaction suivante :

$$H_2MoO_4 + 2NaOH \rightarrow Na_2MoO_4 + 2H_2O$$

EP 0 203 006 B1

Etant donné que le molybdate de sodium est soluble dans l'eau, il sera éliminé par lavage dans le caisson.

Dans le réacteur, les matières organiques de contamination sont pyrolysées sous atmosphère, saturées de vapeur d'eau contenant des gaz neutres, à la température d'environ 500° C, pendant environ une heure.

Au cours de la dernière phase, lorsque le charbon régénéré est plongé dans l'eau du bac, il y a élimination de toutes les matières solubles dans l'eau présentes dans le charbon actif et essentiellement le molybdate et le sulfate de sodium.

L'exemple général ci-après est relatif à la description des caractéristiques mécaniques électriques d'une installation selon l'invention, ainsi que des indications relatives au procédé.

La trémie a un volume de 50 litres et comporte une vis d'Archimède d'alimentation dont la rotation peut varier de 0 à 4 tours/minute, ce qui permet un débit d'alimentation en charbon sec récupéré à l'issue du procédé de traitement de 0 à environ 10 kg/heure. Ceci correspond à l'introduction de 0 à environ 20 kg de charbon humide par heure dans la trémie, dans le cas d'un charbon actif à régénérer contenant environ 55 % d'humidité.

En moyenne, le débit de charbon introduit dans la trémie est de 10 kg/heure, ce qui correspond à la récupération de 5 kg/heure de charbon sec.

Le réacteur est un cylindre de 2,4 m de longueur et 211 mm de diamètre.

La vis de transport du charbon actif dans le tube comporte 20 pas et tourne à la vitesse de 0,1 à 1 tour/minute, assurant un temps de séjour de 20 à 200 minutes.

Les réglages respectifs des deux vis (vis d'alimentation et vis de transport) permettent d'atteindre des taux de remplissage allant jusqu'à environ 50 % du volume interne du réacteur.

De façon pratique, on limite ce taux de remplissage à des valeurs inférieures à environ 45 %, et de préférence comprises de 30 à 40 %.

A la sortie du réacteur, le débit d'eau est réglé de manière à avoir dans le caisson un rapport liquide/solide voisin de 10 m3/t.

Le débit des cascades est d'environ 1 m3/heure.

Le recyclage de la pulpe de charbon obtenu à partir du caisson à la sortie du réacteur se fait au débit de 5 m3/heure.

Le chauffage se fait par des résistances céramiques formant des colliers à l'extérieur du réacteur.

Le réacteur est équipé de six colliers cylindriques de 0,40 m de largeur d'un diamètre intérieur coïncidant avec le diamètre extérieur du réacteur.

Chaque élément a une puissance de 4 kW. La régulation du chauffage est indépendante pour chacun des trois premiers éléments ; les trois derniers ont une régulation commune.

La consommation électrique de chacune des zones de régulation est enregistrée. On peut ainsi définir la répartition de la consommation électrique en fonction de la longueur du réacteur. Ces mesures sont indispensables pour le dimensionnement des éléments équipant un four industriel. En effet, il faut prévoir des éléments de chauffage de forte puissance près de l'entrée du four et des éléments de plus faible puissance près de la sortie. La régénération d'un kilogramme de charbon nécessite d'environ 1,3 à environ 1,7 kcal.

En ce qui concerne le traitement de régénération du charbon actif, il se fait en atmosphère saturée de vapeur d'eau. Cette vapeur d'eau est générée par l'évaporation de l'imprégnant du charbon actif dont l'humidité est d'environ 55 %, et provient également d'un apport extérieur en vapeur d'eau.

En ce qui concerne l'atmosphère qui règne généralement à l'intérieur du réacteur au cours du traitement de régénération du charbon actif dans l'installation, sa composition est généralement la suivante:
- < 1 % en $O_2$,
- < 4 % en $N_2$,
- environ 0,3 g/m3 de poussières,
- environ 0,5 % de CO,
- environ 0,8 % de butane,
- traces de méthane,
- environ 93 % de vapeur d'eau.

Les valeurs respectives de la teneur en pousières, en CO et en butane sont bien inférieures aux valeurs correspondant au seuil d'explosion.

Pour un débit de charbon sec de 10 kg/h, on a donc un débit de vapeur correspondant à la vaporisation de 12,2 l d'eau dans le four. La vapeur est condensée dans la cheminée située au-dessus de l'extrémité de sortie du réacteur. La pression interne est maintenue très proche de la pression atmosphérique notamment par action sur la trappe située au faîte de la cheminée.

11

Les exemples ci-après se rapportent au traitement de charbon actif en poudre dont les caractéristiques viennent d'être indiquées ci-dessus.

EXEMPLE 1

On traite 66 kg de charbon actif sec à 500°C pendant une heure, au débit de 2 kg/h. La perte de poids mesurée après réactivation est de 11 % par rapport au charbon neuf.

La qualité du charbon est testée par adsorption de molybdène et de matières organiques (exprimées en carbone organique total : COT) sur des solutions riches en impuretés. Les rendements d'élimination sont alors comparés à ceux obtenus avec du charbon neuf, comme indiqué dans le tableau I ci-après.

## TABLEAU I

|  | Charbon actif neuf | Charbon actif régénéré |
|---|---|---|
| Rendement d'élimination Mo (%) | 90,9 | 86,4 |
| Rendement d'élimination COT (%) | 94,4 | 93,1 |

Cet exemple montre que le charbon actif régénéré par le procédé selon l'invention, dans l'installation selon l'invention, présente des teneurs en matières organiques et en molybdène pratiquement aussi faibles que celles du charbon actif neuf et donc des propriétés de régénération de même nature, la perte du charbon actif au cours de la régénération étant par ailleurs faible.

EXEMPLE 2

On traite 138 kg de charbon actif saturé sec à 500°C, pendant une heure, au débit de 5,2 kg/h. Le taux de remplissage du four est de 28 %. La perte de poids mesurée est de 9,1 %. les rendements d'élimination en molybdène et matières organiques sont indiqués dans le tableau II ci-après.

## TABLEAU II

|  | Charbon actif neuf | Charbon actif régénéré |
|---|---|---|
| Rendement d'élimination Mo (%) | 90,9 | 86,4 |
| Rendement d'élimination COT (%) | 94,4 | 91,5 |

Là encore, cet exemple montre que le procédé et l'installation selon l'invention permettent d'obtenir un charbon actif régénéré dont les propriétés sont de même nature que le charbon actif neuf, la perte en charbon actif au cours du procédé de régénération étant par ailleurs faible.

Dans le cadre de cet exemple, on a également effectué un bilan énergétique.

La consommation électrique de four est de 8,97 kWh, soit I,72 kWh par kg de charbon actif sec. La répartition de l'utilisation de cette énergie est indiquée dans le tableau III.

## TABLEAU III

| | Energie consommée | | Taux d'utilisation de l'élément % |
|---|---|---|---|
| | kWh | % | |
| 1er élément de 4 kW (côté alimentation) | 3,32 | 37 | 83 |
| 2ème élément | 1,59 | 18 | 40 |
| 3ème élément | 1,39 | 15 | 35 |
| 4ème élément ) | 0,89 | 10 | 22 |
| 5ème élément )mesurés | 0,89 | 10 | 22 |
| 6ème élément ) ensemble (côté sortie) | 0,89 | 10 | 22 |

Ce tableau montre la répartition de la consommation de l'énergie selon l'état du charbon actif dans le four, lequel état évolue en fonction de sa position.

Ces résultats permettent de conclure que le rendement thermique dans l'installation selon l'invention est d'environ 80 %, alors qu'il est souvent inférieur pour les installations déjà connues.

Différents essais ont également été effectués selon le procédé de l'invention, dans l'installation de l'invention, pour optimiser la quantité d'énergie dépensée tout en conservant la qualité de la régénération en faisant varier le débit (rapporté au charbon sec) et le temps de séjour.

Les résultats relatifs à l'énergie consommée pour 1 kg de charbon actif sec régénéré, en fonction du débit et du temps de séjour, sont rassemblés dans le tableau IV ci-après.

Le temps de séjour correspond au passage du charbon actif sur 2 m du réacteur étant donné que sur la première partie du réacteur, c'est-à-dire dans l'exemple du réacteur décrit ci-dessus, sur environ 40 m de longueur, il y a vaporisation de l'eau et mise en température du charbon.

On considère donc que le traitement de régénération proprement dit a lieu sur 2 m du réacteur.

## TABLEAU IV

| Débit de charbon sec kg/h | Temps de séjour | Energie consommée kWh |
|---|---|---|
| 8,5 | 1 h | 1,26 |
| 8 | 1 h | 1,5 |
| 7,5 | 1 h | 1,43 |
| 5,65 | 50 mn | 1,56 |
| 4,2 | 40 mn | 1,98 |
| 8,5 | 40 mn | 1,33 |
| 5,2 | 1 h | 1,72 |

Ces résultats sont des moyennes obtenues sur 4 pu 5 heures, alors que les résultats relatifs au débit de 5,2 kg/h correspondent à une moyenne obtenue sur 26 heures.

Ces résultats permettent de constater, de façon inattendue, que lorsque le débit augmente, pour un temps donné, la consommation d'énergie dépensée pour régénérer 1 kg de charbon actif sec diminue.

Le débit cependant ne doit pas dépasser une valeur au-delà de laquelle le coefficient de remplissage à l'intérieur du réacteur dépasserait 50 %, en pratique 45 %, et ce d'autant plus que la régénération est un traitement qui se fait dans la masse et, par conséquent, la bonne qualité de la régénération implique que la couche de charbon ne soit pas trop épaisse.

Le traitement de régénération implique notamment trois paramètres : le débit, le temps de séjour et le taux de remplissage, qui eux-mêmes sont interdépendants.

Pour un temps de séjour donné, on améliore la dépense énergétique en augmentant le débit, mais on ne peut augmenter le débit au-delà d'une valeur correspondant à taux de remplissage supérieur à 45 %.

Pour un débit donné, on peut diminuer le taux de remplissage en diminuant le temps de séjour, mais ne peut pas non plus être diminué au-dessous d'une valeur à partir de laquelle la régénération n'a plus le temps de se faire.

De façon avantageuse, le débit est de 8 kg/h, et le temps de séjour d'une heure, ce qui correspond à une énergie de l,5 kWh/kg de charbon.

Si on augmente le débit à la valeur de 8,5 kg/h pour un temps de séjour d'une heure, le coefficient de remplissage atteint 45 %, valeur par conséquent limite qu'il vaut mieux éviter.

Si pour un débit de 8,5 kg/h, on diminue le taux de remplissage en diminuant le temps de séjour, en le passant par exemple à 40 minutes, alors la qualité de la régénération n'est pas suffisante, car le temps de séjour est alors trop court.

L'invention ne se limite pas aux modes de réalisation décrits ci-dessus, mais embrasse toutes les variantes.

## Revendications

1. Appareil de régénération de charbon actif comprenant:
   - un réacteur en forme de cylindre (7) comportant une extrémité d'entrée et une extrémité de déchargement, lequel réacteur est équipé d'un dispositif de chauffage, et dans lequel on introduit le charbon à l'aide d'une trémie (1) disposée verticalement, comportant un orifice supérieur d'introduction du charbon actif à régénérer et un orifice inférieur de décharge dudit charbon actif à régénérer;

- des moyens pour assurer l'étanchéité du réacteur vis-à-vis de l'oxygène et situés au-dessus de l'extrémité d'entrée (6) du réacteur;
- un arbre ou une vis d'Archimède (10) situé à l'intérieur du réacteur;
- des moyens de chauffage (8) par induction magnétique ou par résistances, disposés à l'extérieur de la gaine du réacteur et réglables, de façon à avoir une température sensiblement uniforme à l'intérieur du susdit réacteur et suffisante pour pyrolyser les produits de contamination du charbon actif ;
- des moyens en communication avec le réacteur, d'évacuation des gaz et de condensation d'une partie de la vapeur d'eau du réacteur et de piégeage des particules de charbon volantes;
- des moyens en communication avec le réacteur et situés à proximité de l'entrée du réacteur pour réguler la pression afin qu'à l'intérieur du réacteur elle soit voisine de la pression atmosphérique, par addition éventuelle de gaz neutre et/ou de vapeur d'eau;
- des moyens en communication avec le réacteur et situés à proximité de l'entrée du réacteur pour injecter la vapeur d'eau afin que l'atmosphère à l'intérieur du réacteur soit saturée en vapeur d'eau;

caractérisé en ce que lorsque à l'intérieur du réacteur est disposé un arbre, celui-ci est équipé de pales sur toute sa longueur et lorsqu'à l'intérieur du réacteur est disposée une vis d'Archimède (10), celle-ci est continue pour transporter le charbon actif à régénérer de l'extrémité d'entrée du réacteur jusqu'à l'extrémité de déchargement du réacteur,

et en ce que l'extrémité d'entrée du réacteur est en communication avec l'orifice inférieur de décharge de la trémie, et l'extrémité de déchargement du réacteur est telle que le charbon actif régénéré tombe dans un caisson (11) dont la partie supérieure est équipée de moyens pour asperger d'eau le charbon actif provenant du réacteur, lequel caisson (11) plonge dans une cuve d'eau (12),

les moyens ci-dessus pour asperger d'eau servant ainsi à condenser une autre partie de la vapeur d'eau et des gaz résultant de la pyrolyse du réacteur, ce qui créé ainsi une dépression à l'intérieur du réacteur, provoquant le déplacement des gaz et de la vapeur d'eau à l'intérieur du réacteur en cocourant du mouvement du charbon actif transporté à l'intérieur du réacteur,

et caractérisé en ce que les susdits moyens d'évacuation des gaz et de condensation d'une partie de la vapeur d'eau du réacteur et de piégeage des particules de charbon volantes sont aussi situés au dessus de l'extrémité de déchargement du réacteur;

et caractérisé en ce que le réacteur comporte:

- une vis d'Archimède (2) pour décharger de la trémie le charbon actif à régénérer;
- des moyens additionnels en communication avec le réacteur et situés le long du réacteur pour réguler la pression afin qu'à l'intérieur du réacteur elle soit voisine de la pression atmosphérique, par addition éventuelle de gaz neutre et/ou de vapeur d'eau;
- des moyens additionnels en communication avec le réacteur et situés le long du réacteur pour injecter de la vapeur d'eau afin que l'atmosphère à l'intérieur du réacteur soit saturée en vapeur d'eau,
- les susdits moyens pour réguler la pression et la teneur en vapeur d'eau étant avantageusement constitués par des dispositifs communs.

2. Appareil de régénération de charbon actif selon la revendication 1, caractérisé en ce que les moyens pour assurer l'étanchéité du réacteur vis-à-vis de l'oxygène sont constitués par un tube gaveur (3), dont l'axe longitudinal se trouve dans le prolongement de l'axe de la vis d'Archimède (2).

3. Appareil de régénération de charbon actif selon l'une des revendications 1 ou 2, caractérisé en ce que l'axe de la vis d'Archimède (10) est décentré par rapport à l'axe longitudinal du cylindre (7).

4. Appareil de régénération de charbon actif selon l'une quelconque des revendications 1 à 3, caractérisé en ce que les moyens situés au-dessus de l'extrémité de déchargement du réacteur et en communication avec le réacteur de condensation d'une partie de la vapeur d'eau du réacteur et de piégeage des particules de charbon volantes, sont constitués par une cheminée (19) dont l'ouverture est de préférence réglable.

EP 0 203 006 B1

5. Appareil de régénération de charbon actif selon l'une quelconque des revendications 1 à 4, caractérisé en ce que dans le prolongement vertical du dispositif de condensation selon la revendication 4, se trouve un dispositif de soutirage comprenant:
   - un caisson (11) notamment parallélépipédique sur lequel débouche la vis d'Archimède (10);
   - une cuve d'eau (12), dans laquelle le caisson (11) baigne, avantageusement maintenue à la température ambiante par un échangeur de chaleur (13) et avantageusement équipée de moyens qui aspergent d'eau le charbon provenant de l'extrémité de déchargement, ces moyens étant de préférence constitué par des cascades croisées (14).

6. Appareil de régénération de charbon actif selon l'une quelconque des revendications 1 à 5, caractérisé en ce que les moyens pour réguler la pression et la teneur en vapeur d'eau sont constitués par des dispositifs communs, situés près de l'extrémité d'entrée du réacteur et constitués de préférence par une cheminée (9).

7. Procédé de régénération du charbon actif qui comprend les étapes suivantes :
   - on introduit le charbon actif dans une trémie (1) disposée verticalement comportant un orifice supérieur d'introduction du charbon actif à régénérer et un orifice inférieur de décharge dudit charbon actif à régénérer;
   - les moyens pour faire avancer le charbon actif sont constitués par une vis d'Archimède continue ou un arbre équipé de pales sur toute sa longueur,
   - on met en fonctionnement des moyens pour faire avancer le charbon actif à l'intérieur de la trémie et le décharger dans un réacteur, dont l'extrémité d'entrée (6) est en communication avec l'orifice inférieur de décharge de la trémie;
   - on arrête le fonctionnement des moyens qui font avancer le charbon actif dans la trémie, lorsqu'on a fait passer la quantité de charbon actif que l'on souhaite traiter à travers la trémie, de façon à laisser dans la partie inférieure de la trémie, une quantité de charbon actif suffisante pour assurer l'étanchéité du réacteur vis-à-vis de l'air;
   - on met en fonctionnement le chauffage (8) du réacteur, régulé de telle sorte que la température à l'intérieur du réacteur en forme de cylindre (7) soit pratiquement homogène;
   caractérisé en ce que :
   - on met en fonctionnement la vis d'Archimède continue (10) - ou l'arbre équipé de pales sur toute sa longueur - qui traverse longitudinalement le réacteur, et qui est destinée à transporter le charbon actif de l'extrémité d'entrée du réacteur à l'extrémité de déchargement à une vitesse telle que le mouvement des particules de charbon soit suffisamment faible pour qu'il n'y ait pas d'entraînement de poussières de charbon actif dans l'atmosphère du réacteur;
   - à l'extrémité du réacteur, on condense une partie de la vapeur d'eau qui provient du réacteur par des moyens de condensation, et on piège ainsi les particules de poussières volantes;
   - on fait tomber le charbon actif régénéré dans un caisson (11) dont la partie supérieure est équipée de moyens pour asperger d'eau le charbon actif régénéré provenant du réacteur, lequel caisson plonge dans une cuve d'eau (12);
   - on condense ainsi par les moyens pour asperger d'eau une autre partie de la vapeur d'eau et des gaz résultant de la pyrolyse du réacteur et on crée ainsi une dépression à l'intérieur du réacteur, ce qui provoque le déplacement des gaz et de la vapeur d'eau à l'intérieur du réacteur en cocourant du mouvement du charbon actif transporté à l'intérieur du réacteur;
   - on régule la pression à l'intérieur du réacteur, afin qu'elle soit égale environ à la pression atmosphérique, par des moyens permettant l'évacuation de la vapeur d'eau ou des gaz contenus à l'intérieur du réacteur, pour éviter la surpression, ou permettant d'introduire un gaz neutre ou de la vapeur d'eau en cas de dépression;
   - on régule la teneur en vapeur d'eau à l'intérieur du réacteur par des moyens permettant d'introduire de la vapeur d'eau, afin que l'atmosphère du réacteur soit saturée en vapeur d'eau.

## Claims

1. Apparatus for regenerating active carbon comprising :
   - a cylinder shaped reactor (7), comprising an input end and an unloading end, said reactor being equipped with heating means, and in which carbon is introduced by means of a hopper (1) vertically arranged, comprising an upper orifice for the introduction of the active carbon to be regenerated and a lower orifice for unloading said active carbon to be regenerated;

- means to provide the fluid-tightness of the reactor with respect to oxygen and situated above the input end (6) of the reactor;
- a shaft or an Archimedes screw (10) situated inside the reactor;
- means for heating (8) by magnetic induction or by resistances, positioned outside the sheath of the reactor and adjustable, so as to have a substantially uniform temperature inside the abovesaid reactor and sufficient to pyrolyse the contaminating substances of the active carbon;
- means in communication with the reactor for evacuating gases and condensing a part of the steam from the reactor and for trapping flying particles of carbon,
- means in communication with the reactor and situated close to the input end of the reactor to regulate the pressure so that inside the reactor it is close to atmospheric pressure, by the possible addition of neutral gas and/or of water vapor;
- means in communication with the reactor and situated close to the input end of the reactor, to inject steam so that the atmosphere inside the reactor is saturated with water vapor;

characterized by the fact that when a shaft is situated inside the reactor, it is equipped with blades on its whole length and when an Archimedes screw (10) is inside the reactor, it is continuous to transport the active carbon to be regenerated, from the input end of the reactor to the unload end of the reactor,

and in that the input end of the reactor is communicating with the lower unload end of the hopper, and the unload end of the reactor is such that the regenerated active carbon falls into a coffer (11) the upper end which is equipped with means to spray with water the regenerated active carbon coming from the reactor, said coffer (11) plunging into a water tank (12),

the above-mentioned means to spray with water being also used to condense another part of the water steam and of the gases resulting from the pyrolysis of the reactor, which thus creates a reduced pressure inside the reactor, thus causing the circulation of the gases and of the water vapor inside the reactor in cocurrent with the active carbon transported inside the reactor,

and characterized in that the abovesaid means for evacuating the gases and for condensing a part of the water vapor from the reactor and for trapping flying particles of carbon are also situated above the unload end of the reactor,

and characterized by the fact that the reactor comprises :
- an Archimedes screw (2) to unload from the hopper the active carbon to be regenerated;
- additional means communicating with the reactor and situated along the reactor to regulate the pressure so that inside the reactor it is close to the atmospheric pressure, by possible addition of neutral gas and/or water vapor;
- additional means communicating with the reactor and situated along the reactor to inject water vapor so that the atmosphere inside the reactor is saturated with water vapor;
- the abovesaid means to regulate the pressure and the contents of water vapor being advantageously constituted by common devices.

2. Apparatus for regenerating active carbon according to claim 1, characterized in that the means which provide the fluid-tightness of the reactor with respect to oxygen are constituted by a feed tube (3), whose longitudinal axis is an extension of the axis of the Archimedes screw (2).

3. Apparatus for the regeneration of active carbon according to one of claims 1 to 2, characterized in that the axis of Archimedes screw (10) is decentered with respect to the longitudinal axis of the cylinder (7).

4. Apparatus for the regeneration of active carbon according to anyone of claims 1 to 3, characterized in that the means situated above the unload end of the reactor and in communication with the reactor for condensing a part of the water vapor from the reactor and for trapping flying carbon particles, are constituted by a chimney (19) of which the opening is preferably adjustable.

5. Apparatus for the regeneration of active carbon according to anyone of claims 1 to 4, characterized in that a recovery device is in the vertical extension of the condensation device according to claim 4, said recovery device comprising :
- a coffer (11) particularly parallelepipedic, upon which the Archimedes screw (10) comes out;
- a water tank (12) into which the coffer (11) dips, advantageously kept at ambient temperature by a heat exchanger (13) and advantageously equipped with means which spray with water the carbon coming from the unload end, these means being preferably constituted by crossed waterfalls (14).

6. Apparatus for the regeneration of active carbon according to anyone of claims 1 to 5, characterized in that the means for regulating the pressure and the content of water vapor are advantageously constituted by common devices, situated close to the input end of the reactor and constituted preferably by a chimney (9).

7. Method of regenerating active carbon which comprises the following steps :
   - introducing the active carbon into a hopper (1) positioned vertically comprising an upper input orifice for the active carbon to be regenerated and a lower unload orifice for said active carbon to be regenerated;
   - the means for advancing the active carbon are constituted by a continuous Archimedes screw or by a shaft equipped with blades on its whole length;
   - means for advancing the active carbon inside the hopper and unloading it into a reactor, whose input end (6) is in communication with the lower unload orifice of the hopper;
   - stopping the operation of the means which cause the active carbon to advance into the hopper, when the amount of active carbon that it is desired to treat has been made to pass through the hopper, so as to leave in the lower part of the hopper, an amount of active carbon sufficient to provide the fluid-tightness of the reactor with respect to the air;
   - placing in operation the heating (8) of the reactor, regulated so that the temperature inside the cylinder shaped reactor (7) is practically homogeneous; characterized in that one places in operation the Archimedes screw (10) - or the bladed shaft on its whole length, which traverses the reactor longitudinally, and in which is designated to transport the active carbon from the input end of the reactor to the unload end at a speed such that the motion of the carbon particles is sufficiently low so that there is no drive of active carbon dusts into the atmosphere of the reactor;
   - at the end of the reactor, condensing a part of the water vapor which comes from the reactor by condensing means, and thus trapping the flying dust particles;
   - causing the regenerated active carbon to fall into a coffer (11) of which the upper part is equipped with means for spraying with water the regenerated active carbon coming from the reactor, which coffer dips into a water tank (12);
   - condensing thus by the water spraying means another part of the water vapor and the gases resulting from the pyrolysis of the reactor and thus creating a reduced pressure inside the reactor, which causes the movement of the gases and of the water vapor inside the reactor in cocurrent with the movement of the active carbon transported inside the reactor;
   - regulating the pressure inside the reactor in order that it may be equal approximately to the atmospheric pressure by means enabling the removal of the water vapor or of the gases contained inside the reactor, to avoid over-pressure, or enabling the introduction of a neutral gas or of water vapor in the case of under-pressure;
   - regulating the content of water vapor inside the reactor by means enabling the introduction of water vapor, in order that the atmosphere of the reactor may be saturated with water vapor.

## Ansprüche

1. Vorrichtung zur Regeneration von Aktivkohle, enthaltend:
   - einen Reaktor (7) in Form eines Zylinders mit einem Eingangsende und einem Entladeende, wobei der Reaktor mit einer Heizeinrichtung versehen ist und man in ihn die Kohle mit Hilfe eines senkrecht angeordneten Fülltrichters (1) einführt, der eine obere Öffnung zur Einführung der zu regenerierenden Aktivkohle und eine untere Entladeöffnung der zu regenerierenden Aktivkohle enthält;
   - Mittel zur Gewährleistung der Dichtigkeit des Reaktors gegenüber Sauerstoff, die oberhalb des Eingangsendes (6) des Reaktors angeordnet sind;
   - eine im Inneren des Reaktors angeordnete Welle oder eine archimedische Schraube (10);
   - Mittel (8) zum Heizen durch magnetische Induktion oder durch Widerstände, angeordnet außerhalb der Reaktorhülle und derart regulierbar, daß man im Inneren des Reaktors eine im wesentlichen gleichförmige Temperatur hat, die ausreicht, die Kontaminationsprodukte der Aktivkohle zu pyrolysieren;
   - in Verbindung mit dem Reaktor stehende Mittel zum Entfernen von Gasen und der Kondensation eines Teiles des Wasserdampfes des Reaktors und zum Fällen der schwebenden Kohleteilchen;
   - in Verbindung mit den Reaktor stehende, in der Nähe des Eingangs in den Reaktor angeordnete Mittel zum Regulieren des Drucks, damit dieser im Inneren des Reaktors in der Nähe des atmosphärischen Druckes liegt, durch mögliche Hinzufügung von neutralem Gas und/oder Wasserdampf;

- in Verbindung mit dem Reaktor stehende und in der Nähe des Eingangs in den Reaktor angeordnete Mittel zum Injizieren von Wasserdampf, damit die Atmosphäre im Inneren des Reaktors mit Wasserdampf gesättigt wird;

dadurch gekennzeichnet, daß dann, wenn im Inneren des Reaktors eine Welle angeordnet ist, diese mit Schaufeln über ihre gesamte Länge versehen ist, und dann, wenn im Inneren des Reaktors eine archimedische Schraube (10) angeordnet ist, diese kontinuierlich ist, um die zu regenerierende Aktivkohle von dem Eingangsende des Reaktors bis zu dem Entladeende des Reaktors zu transportieren,

und daß das Eingangsende des Reaktors in Verbindung mit der unteren Entladeöffnung des Einfülltrichters steht und das Entladeende des Reaktors derart ist, daß die regenerierte Aktivkohle in einen Kasten (11) fällt, dessen oberer Teil mit Mitteln ausgerüstet ist, um die aus dem Reaktor stammende Aktivkohle mit Wasser zu besprühen, wobei der Kasten (11) in einen Wassertrog (12) taucht,

wobei die obigen Mittel zum Besprühen mit Wasser auf diese Weise dazu dienen, einen weiteren Teil des Wasserdampfes und der bei der Pyrolyse des Reaktors entstehenden Gase zu kondensieren, was auf diese Weise eine Druckverminderung im Inneren des Reaktors schafft, die die Bewegung der Gase und des Wasserdampfes im Inneren des Reaktors gleichlaufend mit der Bewegung der im Inneren des Reaktors transportierten Aktivkohle hervorruft;

und dadurch gekennzeichnet, daß die oben erwähnten Mittel zum Evakuieren der Gase und der Kondensation eines Teils des Wasserdampfes des Reaktors und zum Ausfällen der schwebenden Kohleteilchen ebenfalls oberhalb des Entladeendes des Reaktors angeordnet sind;

und dadurch gekennzeichnet, daß der Reaktor enthält:

- eine archimedische Schraube (2) zum Ausbringen der zu regenerierenden Aktivkohle aus dem Fülltrichter;
- zusätzliche, in Verbindung mit dem Reaktor stehende und längs der Länge des Reaktors angeordnete Mittel zum Regulieren des Drucks, damit dieser im Innern des Reaktors im Bereich des atmosphärischen Drucks liegt, durch mögliche Hinzugabe von neutralem Gas und/oder Wasserdampf;
- zusätzliche, in Verbindung mit dem Reaktor stehende und längs der Länge des Reaktors angeordnete Mittel zum Injizieren von Wasserdampf, damit die Atmosphäre im Inneren des Reaktors mit Wasserdampf gesättigt wird,
- wobei die Mittel zum Regulieren des Drucks und des Gehalts an Wasserdampf vorteilhafterweise von gemeinsamen Vorrichtungen gebildet werden.

2. Vorrichtung zur Regenerierung von Aktivkohle nach Anspruch 1, dadurch gekennzeichnet, daß die Mittel zur Gewährleistung der Dichtigkeit des Reaktors gegenüber Sauerstoff von einem Zuführrohr (3) gebildet werden, dessen Längsachse sich in der Verlängerung der Achse der archimedischen Schraube (2) befindet.

3. Vorrichtung zur Regenerierung von Aktivkohle nach einem der Ansprüche 1 oder 2, dadurch gekennzeichnet, daß die Achse der archimedischen Schraube (10) gegenüber der Längsachse des Zylinders (7) versetzt ist.

4. Vorrichtung zur Regenerierung von Aktivkohle nach einem der Ansprüche 1 bis 3, dadurch gekennzeichnet, daß die oberhalb des Entladeendes des Reaktors angeordneten und in Verbindung mit dem Reaktor stehenden Mittel zur Kondensation eines Teils des Wasserdampfes des Reaktors und zum Ausfällen der schwebenden Kohleteilchen von einem Kamin (19) gebildet werden, dessen Öffnung vorzugsweise regelbar ist.

5. Vorrichtung zur Regenerierung von Aktivkohle nach einem der Ansprüche 1 bis 4, dadurch gekennzeichnet, daß sich in der senkrechten Verlängerung der Kondensationsvorrichtung nach Anspruch 4 eine Umfüllvorrichtung befindet, die enthält:

- einen insbesondere parallelepipedischen Kasten (11), auf dem die Archimedesschraube (10) mündet;
- einen Wassertrog (12), in den der Kasten (11) eintaucht und der vorteilhafterweise durch einen Wärmetauscher (13) auf Umgebungstemperatur gehalten wird und vorteilhafterweise mit Mitteln versehen ist, die die von dem Entladeende kommende Kohle mit Wasser besprühen, wobei diese

19

Mittel vorzugsweise von gekreuzten Kaskaden (14) gebildet werden.

6. Vorrichtung zur Regenerierung von Aktivkohle nach einem der Ansprüche 1 bis 5, dadurch gekennzeichnet, daß die Mittel zum Regulieren des Druckes und des Wasserdampfgehaltes von gemeinsamen Vorrichtungen gebildet werden, die in der Nähe des Eingangsendes des Reaktors angeordnet sind und vorzugsweise von einem Kamin (9) gebildet werden.

7. Verfahren zur Regenerierung von Aktivkohle, das die folgenden Verfahrensschritte enthält:
   - man führt die Aktivkohle in einen senkrecht angeordneten Trichter (1) ein, der eine obere Einführöffnung für die zu regenerierende Aktivkohle und eine untere Abgabeöffnung der zu regenerierenden Aktivkohle aufweist;
   - die Mittel, um die Aktivkohle vorwärts zu bewegen, werden von einer kontinuierlichen archimedischen Schraube oder einer über ihre gesamte Länge mit Schaufeln versehenen Welle gebildet,
   - man setzt Mittel in Funktion, um die Aktivkohle im Inneren des Trichters in Bewegung zu setzen und sie in einen Reaktor zu entladen, dessen Eingangsende (6) in Verbindung mit der unteren Entladeöffnung des Trichters steht;
   - man hält den Betrieb der Mittel an, die die Aktivkohle in dem Trichter vorwärtsrücken lassen, sobald man die Menge an Aktivkohle, die man zu behandeln wünscht, durch den Trichter hat hindurchgelangen lassen, so daß man in dem unteren Teil des Trichters eine Menge von Aktivkohle zurückläßt, die ausreicht, um die Dichtigkeit des Reaktors gegenüber Luft zu gewährleisten;
   - man setzt die Beheizung (8) des Reaktors in Funktion, die derart reguliert wird, daß die Temperatur im Inneren des Reaktors (7) in Form eines Zylinders praktisch homogen ist;
   dadurch gekennzeichnet, daß:
   - man die kontinuierliche archimedische Schraube (10) - oder die mit Schaufeln auf ihrer gesamten Länge versehene Welle - in Funktion setzt, die in Längsrichtung den Reaktor durchsetzt und dazu bestimmt ist, die Aktivkohle von dem Eingangsende des Reaktors zu dem Entladeende mit einer derartigen Geschwindigkeit zu transportieren, daß die Bewegung der Kohleteilchen ausreichend klein ist, so daß es keine Mitnahme von Stäuben der Aktivkohle in die Atmosphäre des Reaktors gibt;
   - man am Ende des Reaktors einen Teil des Wasserdampfes, der aus dem Reaktor kommt, durch Kondensationsmittel kondensiert und man auf diese Weise die schwebenden Staubteilchen ausfällt;
   - man die regenerierte Aktivkohle in einen Kasten (11) fallen läßt, dessen oberer Teil mit Mitteln zum Besprühen der aus dem Reaktor kommenden regenerierten Aktivkohle mit Wasser versehen ist und der in einen Wassertrog (12) eintaucht;
   - man so durch die Mittel zum Besprühen mit Wasser einen weiteren Teil des Wasserdampfes und der bei der Pyrolyse des Reaktors entstehenden Gase kondensiert und man so im Inneren des Reaktors eine Druckverringerung schafft, die die Bewegung der Gase und des Wasserdampfes im Innern des Reaktors gleichlaufend mit der Bewegung der im Innern des Reaktors transportierten Aktivkohle hervorruft;
   - man den Druck im Innern des Reaktors reguliert, damit dieser etwa dem atmosphärischen Druck gleich ist, mit Hilfe von Mitteln, die die Herausführung des Wasserdampfes oder der im Inneren des Reaktors enthaltenen Gase ermöglichen, um den Überdruck zu vermeiden, oder das Einführen eines neutralen Gases oder von Wasserdampf im Fall des Unterdrucks ermöglichen;
   - man den Wasserdampfgehalt im Inneren des Reaktors durch Mittel reguliert, die das Einführen von Wasserdampf ermöglichen, damit die Atmosphäre des Reaktors wasserdampfgesättigt wird.

# _ FIGURE 1 _

# _FIGURE 2 _

EP 0 203 006 B1

EP 0 203 006 B1

# FIGURE 3

23

# _FIGURE  4 _

11

14

18

17

13

12

15

16